# EUROPÄISCHE PATENTANMELDUNG

(11) **EP 1 980 828 A2**
(43) Veröffentlichungstag der Anmeldung: **15.10.2008**
(21) Anmeldenummer: 08007289.5
(22) Anmeldetag: 14.04.2008
(51) Int. Cl.: G01G 21/28, G01G 19/44

(54) **Waage**

(30) Priorität: 12.04.2007 DE 102007017606
(71) Anmelder: Soehnle Professional GmbH & Co. KG, 71540 Murrhardt (DE)
(72) Erfinder: Gerster, Stephan, 53342 Wachtberg-Pech (DE)
(74) Vertreter: Ullrich & Naumann

(57) **Zusammenfassung**

Eine Waage mit einer Auflageeinrichtung (1) für ein zu wiegendes Gut oder eine zu wiegende Person und einer der Auflageeinrichtung (1) zugeordneten Bedien- und/oder Anzeigeeinrichtung (2), ist dadurch gekennzeichnet, dass zwischen der Auflageeinrichtung (1) und der Bedien- und/oder Anzeigeeinrichtung (2) eine Funkverbindung oder optische Verbindung zur Übertragung beliebiger Daten realisierbar ist.

## Beschreibung

Die vorliegende Erfindung betrifft eine Waage mit einer Auflageeinrichtung für ein zu wiegendes Gut oder eine zu wiegende Person und einer der Auflageeinrichtung zugeordneten Bedien- und/oder Anzeigeeinrichtung.

Waagen der eingangs genannten Art sind aus der Praxis bekannt und existieren in unterschiedlichen Ausführungsformen.

Bei den bekannten Waagen ist die Auflageeinrichtung, bspw. eine Plattform, einem Gehäuse zugeordnet, in dem ebenfalls die Bedien- und/oder Anzeigeeinrichtung untergebracht ist. Die bekannte Waage ist sehr unflexibel, da bspw. eine Ablesung der Anzeigeeinrichtung in unmittelbarer Nähe der Auflageeinrichtung zu erfolgen hat. Insbesondere bei beengten räumlichen Verhältnissen ist dies mühsam.

Der vorliegenden Erfindung liegt daher die Aufgabe zugrunde, eine flexiblere Ausgestaltung einer Waage anzugeben.

Erfindungsgemäß wird die voranstehende Aufgabe durch eine Waage mit den Merkmalen des Patentanspruchs 1 gelöst. Danach ist die gattungsbildende Waage dadurch gekennzeichnet, dass zwischen der Auflageeinrichtung und der Bedien- und/oder Anzeigeeinrichtung eine Funkverbindung oder optische Verbindung zur Übertragung von Daten realisierbar ist.

In erfindungsgemäßer Weise ist zunächst erkannt worden, dass eine Auflageeinrichtung und eine Bedien- und/oder Anzeigeeinrichtung nicht über ein gemeinsames Gehäuse verbunden sein müssen. In weiter erfindungsgemäßer Weise ist erkannt worden, dass zwischen der Auflageeinrichtung und der Bedien- und/oder Anzeigeeinrichtung eine Funkverbindung oder optische Verbindung realisierbar ist, mit der beliebige Daten übertragen werden können. So kann das Gewicht des gewogenen Guts oder der gewogenen Person in der Anzeigeeinrichtung ablesbar gemacht werden.

Bei einer konkreten Ausführungsform könnte die Funkverbindung als HF-Funkverbindung ausgeführt sein. Ebenso ist es denkbar, dass die Verbindung als optische Verbindung, vorzugsweise als Infrarotverbindung, ausgeführt ist. Eine Bluetooth-Verbindung ist von besonderer Bedeutung, zumal eine Kopplung mit beliebigen Bluetooth-Geräten möglich ist.

Auch ist es denkbar, dass die Verbindung als W-LAN-Verbindung eines Computers bzw. Computernetzes ausgeführt ist. Somit lässt sich die Waage bzw. lassen sich deren Komponenten mühelos an einen Computer bzw. an ein Computernetz anbinden.

Entsprechend den voranstehenden Ausführungen ist die Verbindung nicht "kabelgebunden". Die Bedien- und/oder Anzeigeeinrichtung, die auch als Terminal bezeichnet werden kann, ist durch einen Benutzer frei bewegbar bzw. positionierbar.

Die Funkverbindung oder optische Verbindung kann auch zum Übertragen der Daten an eine EDV-Anlage, an ein Computer-Netzwerk, etc. verwendet werden.

Die Bedien- und/oder Anzeigeeinrichtung und/oder die Auflageeinrichtung können bzw. kann mit einer Batterie oder einem Akku betrieben werden. Dies hat eine Ortsunabhängigkeit zur Folge. Die Ladung eines Akkus kann über ein Kabel und/oder in einer "Dockingstation" erfolgen.

In Bezug auf die Anbindung an einen PC ist von Bedeutung, dass die Bedien-/Anzeigeeinrichtung per Kabel oder drahtlos mit dem Rechner/PC verbunden sein kann. Dabei ist es denkbar, dass die Verbindung einen Internet-Zugang, vorzugsweise über den Rechner/PC, umfasst.

In ganz besonders vorteilhafter Weise umfasst die Auflageeinrichtung einen eigenen Prozessor, der Rohmessdaten oder Gewichtsdaten an die Bedien-/Anzeigeeinrichtung und/oder an den Rechner/PC übermittelt.

Auch die Bedien-/Anzeigeeinrichtung kann einen Prozessor umfassen, wobei die Bedien-/Anzeigeeinrichtung Rohmessdaten bzw. Gewichtsdaten und/oder aufbereitete Daten an den Rechner/PC übermittelt.

Der Rechner/PC umfasst einen Datenspeicher, der zum Speichern originärer Rohdaten, aufbereiteter und/oder verknüpfter Daten dient. Letztendlich lassen sich die Daten einzelnen Vorgängen, Personen oder dgl. zuordnen und entsprechend ablegen. Auch ist es denkbar, dass die abgelegten Daten zeitgleich oder bei Bedarf weiterverarbeitet werden, bspw. zur grafischen Darstellung eines zeitlichen Verlaufs von Gewichtsdaten.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel einer gattungsbildenden Waage,
- Fig. 2: in einer schematischen Ansicht ein Ausführungsbeispiel einer Bedien-/Anzeigeeinrichtung einer erfindungsgemäßen Waage und
- Fig. 3: in einer schematischen Vorderansicht den Gegenstand aus Fig. 2.

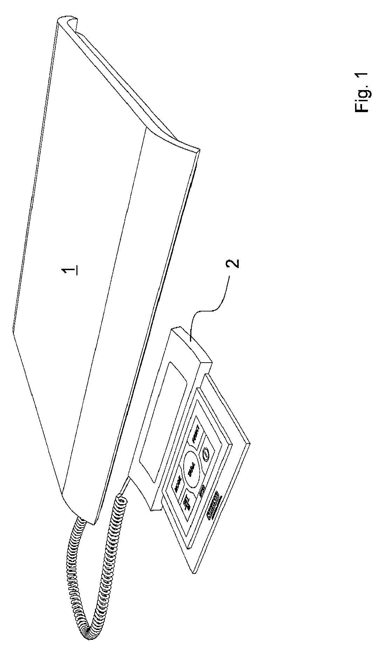

Die Fig. 1 bis 3 zeigen eine Waage mit einer Auflageeinrichtung 1 und einer zugeordneten Bedien-/Anzeigeeinrichtung 2.

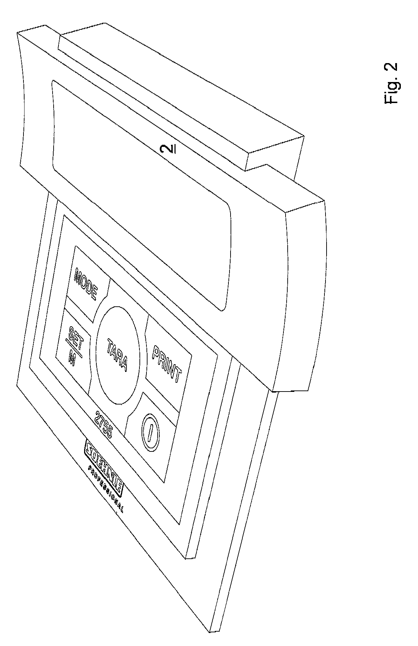

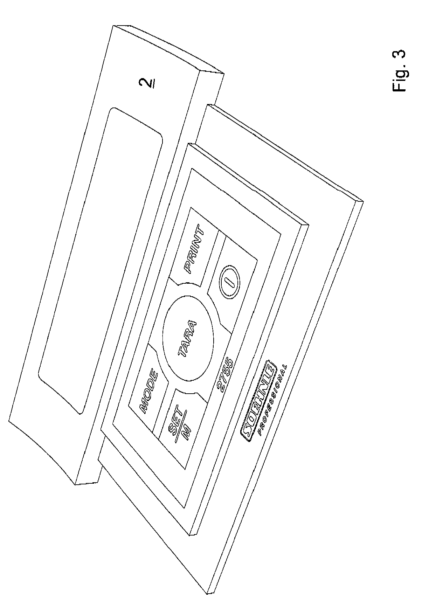

Gemäß Darstellung in Fig. 1 ist eine herkömmliche Kopplung mittels Kabel zwischen der Auflageeinrichtung 1 und der Bedien-/Anzeigeeinrichtung 2 realisiert. Die Fig. 2 und 3 zeigen jeweils für sich ein Ausführungsbeispiel der Bedien-/Anzeigeeinrichtung 2, die über eine Funkverbindung mit der dort nicht Auflageeinrichtung 1 kommunizieren kann.

Hinsichtlich weiterer Merkmale, die sich den Fig. nicht entnehmen lassen, sei zur Vermeidung von Wiederholungen auf den allgemeinen Teil der Beschreibung verwiesen.

Schließlich sei angemerkt, dass das zuvor erörterte Ausführungsbeispiel lediglich der beispielhaften Erörterung der beanspruchten Lehre dient, diese jedoch nicht auf das Ausführungsbeispiel einschränkt.

### Bezugszeichenliste

- 1: Auflageeinrichtung
- 2: Bedien-/Anzeigeeinrichtung

## Patentansprüche

1. Waage mit einer Auflageeinrichtung (1) für ein zu wiegendes Gut oder eine zu wiegende Person und einer der Auflageeinrichtung (1) zugeordneten Bedien- und/oder Anzeigeeinrichtung (2),
**dadurch gekennzeichnet, dass** zwischen der Auflageeinrichtung (1) und der Bedien- und/oder Anzeigeeinrichtung (2) eine Funkverbindung oder optische Verbindung zur Übertragung beliebiger Daten realisierbar ist.

2. Waage nach Anspruch 1, **dadurch gekennzeichnet, dass** die Verbindung als HF-Funkverbindung ausgeführt ist oder
als optische Verbindung, vorzugsweise als Infrarotverbindung, ausgeführt ist oder als
als Bluetooth-Verbindung ausgeführt ist.

3. Waage nach Anspruch 1, **dadurch gekennzeichnet, dass** die Verbindung als W-LAN-Verbindung eines Computers bzw. Computernetzes ausgeführt ist.

4. Waage nach einem der Ansprüche 1 bis 3, **dadurch gekennzeichnet, dass** die Verbindung den Zugang zu einem Rechner, insbesondere zu einem PC, umfasst.

5. Waage nach Anspruch 4, **dadurch gekennzeichnet, dass** die Bedien-/Anzeigeeinrichtung (2) per Kabel oder drahtlos mit dem Rechner/PC verbunden ist.

6. Waage nach Anspruch 4 oder 5, **dadurch gekennzeichnet, dass** die Verbindung einen Internet-Zugang über den Rechner/PC umfasst.

7. Waage nach einem der Ansprüche 1 bis 6, **dadurch gekennzeichnet, dass** die Auflageeinrichtung (1) einen Prozessor umfasst, der Rohmessdaten oder Gewichtsdaten an die Bedien-/Anzeigeeinrichtung (2) und/oder an den Rechner/PC übermittelt.

8. Waage nach einem der Ansprüche 1 bis 7, **dadurch gekennzeichnet, dass** die Bedien-/Anzeigeeinrichtung (2) einen Prozessor umfasst.

9. Waage nach Anspruch 8, **dadurch gekennzeichnet, dass** die Bedien-/Anzeigeeinrichtung (2) Rohmessdaten bzw. Gewichtsdaten und/oder aufbereitete Daten an den Rechner/PC übermittelt.

10. Waage nach einem der Ansprüche 1 bis 9, **dadurch gekennzeichnet, dass** der Rechner/PC einen Datenspeicher umfasst, der zum Speichern originärer Rohdaten, aufbereiteter und/oder verknüpfter Daten dient.
